# EUROPÄISCHE PATENTANMELDUNG

(11) **EP 2 816 437 A1**
(43) Veröffentlichungstag der Anmeldung: **24.12.2014**
(21) Anmeldenummer: 14002078.5
(22) Anmeldetag: 17.06.2014
(51) Int. Cl.: G05D 23/13, G05D 23/02, F16K 11/00

(54) **Sanitäre Thermostatarmatur**

(30) Priorität: 21.06.2013 DE 102013010412
(71) Anmelder: HANSA METALLWERKE AG, 70567 Stuttgart (DE)
(72) Erfinder: Assenmacher, Bernd, 70597 Stuttgart (DE)
(74) Vertreter: Ostertag, Ulrich

(57) **Zusammenfassung**

Bei einer sanitären Thermostatarmatur ist die Außenkontur eines Anschlagrings (5), mit dem sich eine Maximaltemperatur des aus der Thermostatarmatur ausfließenden Mischwassers einstellen lässt, so gestaltet, dass er sich bereichsweise in einen Aufnahmeraum (2) des Thermostatgehäuses (1) in einer gegenüber der Achse des Aufnahmeraumes (2) verkippten Position einschieben lässt. In derjenigen axialen Position, welcher der Fertigmontagestellung entspricht, ist der Anschlagring (5) in eine zum Aufnahmeraum (2) koaxiale Lage kippbar, in welcher eine an ihm ausgebildete Haltenase (20) in eine kreisbogenförmige Nut (7) des Aufnahmeraums (2) eindringt und in welcher eine Schraube (24) in ein Gewinde (18) des Anschlagrings (5) einschraubbar ist. Auf diese Weise lässt sich der Anschlagring (5) gemeinsam mit dem Regelteil (3) der sanitären Thermostatarmatur zuverlässig und mit geringem Aufwand im Thermostatgehäuse (1) befestigen.

## Beschreibung

Die Erfindung betrifft eine sanitäre Thermostatarmatur mit
a) einem Thermostatgehäuse;
b) einem in einem Aufnahmeraum des Thermostatgehäuses zumindest teilweise angeordneten Regelteil, das seinerseits aufweist:
   ba) ein in einem Gehäuse angeordnetes temperaturempfindliches Element;
   bb) ein durch das temperaturempfindliche Element verschiebbares Regelglied, das mit einem Warmwassersitz und einem Kaltwassersitz zusammenwirkt, die in dem Aufnahmeraum ausgebildet sind;
   bc) eine Stellspindel, an welcher die Solltemperatur des aus der Thermostatarmatur ausfließenden Mischwassers einstellbar ist;
c) einem Handgriff, der auf der Stellspindel befestigbar ist und einen ersten Anschlag aufweist;
d) einem Anschlagring, der zumindest teilweise in dem Aufnahmeraum des Thermostatgehäuses angeordnet ist und einen zweiten Anschlag aufweist, der mit dem ersten Anschlag zusammenwirkt.

Thermostatarmaturen dieser Art sind in unterschiedlichster Ausgestaltung bekannt. Bei einer im Markt besonders häufig vertretenen Variante wird das Regelteil im Thermostatgehäuse über eine Hohlschraube befestigt. Diese Hohlschraube besitzt auf ihrer Außenmantelfläche ein Vielzahnprofil, auf das dann der Anschlagring, der ein entsprechendes Innenprofil besitzt, in unterschiedlichen Winkelpositionen aufgesteckt werden kann. Diese Art der Befestigung erfordert viele teure Teile; die Montage ist aufwendig. Alternativ ist auch eine Konstruktion bekannt, bei welcher die Befestigung des Anschlagringes auf der Hohlschraube mit einer radialen Stiftoder Madenschraube erfolgt. In diesem Falle kann der Anschlagring bei Druckschlägen kippen; gegebenenfalls kann die Armatur undicht werden.

Aufgabe der vorliegenden Erfindung ist es, eine Thermostatarmatur der eingangs genannten Art so auszugestalten, dass der Anschlagring auf preiswerte, einfache Art befestigbar ist.

Diese Aufgabe wird erfindungsgemäß dadurch gelöst, dass
e) der Anschlagring eine Haltenase aufweist, die in der Fertigmontagestellung in eine kreisbogenförmige Nut an der Innenmantelfläche des Aufnahmeraums des Thermostatgehäuses eingreift, sowie ein Gewinde, in welches in der Fertigmontagestellung eine durch eine Öffnung des Thermostatgehäuses geführte Schraube einschraubbar ist;
   wobei
f) die Außenkontur des Anschlagrings so gestaltet ist, dass
   fa) in einem gegenüber der Achse des Aufnahmeraums des Thermostatgehäuses verkippten Position der die Haltenase aufweisende Bereich in den Aufnahmeraum einführbar ist;
   fb) der Anschlagring in einer axialen Position, welche der Fertigmontagestellung entspricht, in eine zum Aufnahmeraum koaxiale Lage zurückkippbar ist, in welcher die Haltenase in die kreisbogenförmige Nut des Aufnahmeraums eindringt und die Schraube in das Gewinde des Anschlagrings einschraubbar ist.

Bei der erfindungsgemäßen Ausgestaltung der sanitären Thermostatarmatur werden vergleichsweise wenig Teile benötigt. Gleichwohl wird eine dichte, kippsichere Befestigung des Anschlagringes durch zwei Befestigungspunkte erzielt.

Eine bevorzugte Ausführungsform der Erfindung zeichnet sich dadurch aus, dass das Gewinde des Anschlagringes der Haltenase etwa diametral gegenüberliegt. Auf diese Weise wird eine optimale Kippsicherheit erreicht.

Bevorzugt wird weiter, dass der Anschlagring eine Anschlagfläche aufweist, mit der er in der Fertigmontagestellung an einer Anschlagfläche des Gehäuses des Regelteils anliegt und dieses dadurch in Anlage an einer Anschlagfläche des Aufnahmeraums des Thermostatgehäuses hält. Bei dieser Ausgestaltung wird gleichzeitig mit dem Anschlagring auch das Regelteil im Aufnahmeraum befestigt, ohne dass hierfür zusätzliche Teile oder ein zusätzlicher Montagevorgang erforderlich wären.

In vielen Fällen ist gewünscht, dass die maximale Temperatur des aus der Thermostatarmatur ausfliessenden Mischwassers einstellbar ist. Hierfür eignet sich eine Ausgestaltung der Erfindung, bei welcher der Anschlagring in unterschiedlichen Winkelpositionen im Aufnahmeraum des Thermostatgehäuses befestigbar ist.

Ein Ausführungsbeispiel der Erfindung wird nachfolgend anhand der Zeichnung näher erläutert; es zeigen
- Figur 1: einen Teilschnitt durch eine sanitäre Thermostatarmatur in teilmontiertem Zustand;
- Figur 2: einen Teilschnitt, ähnlich der Figur 1, jedoch in fertig montiertem Zustand.

In der Zeichnung ist mit dem Bezugszeichen 1 der Endbereich eines Thermostatgehäuses gekennzeichnet, das grundsätzlich beliebigen Bauweise haben kann, wie er beispielsweise aus dem Stande der Technik bekannt ist. Insbesondere besitzt das Thermostatgehäuse 1 einen zu einer Seite hin offenen Aufnahmeraum 2, der im Wesentlichen rotationssymmetrisch ist und mehrere Abstufungen aufweist, wie nachfolgend im Einzelnen noch deutlich wird.

In den Aufnahmeraum 2 ist von der Seite her das sog. Regelteil 3 bereichsweise eingeschoben. Auch dieses besitzt grundsätzlich herkömmliche Bauweise. Es enthält in einem Gehäuses 4 das eigentliche, in der Zeichnung nicht erkennbare temperaturempfindliche Element, beispielsweise ein Dehnstoffelement, das thermisch an das aus der Thermostatarmatur auslaufenden Mischwasser angekoppelt ist und entsprechend dieser Temperatur ein ebenfalls in der Zeichnung nicht dargestelltes Regelglied, beispielsweise einen Doppelventilkegel, bewegt. Durch Drehen an einer Stellspindel 25, auf die ein entsprechender Handgriff aufgesetzt werden kann, lässt sich die Position des Regelglieds und damit die Solltemperatur, auf welche das Regelteil 3 die Temperatur des Mischwassers einstellt, verändern. All dies ist an und für sich bekannt.

Eine dritte Hauptkomponente der in der Zeichnung dargestellten Thermostatarmatur ist ein Anschlagring 5. Dieser ist in unterschiedlichen Winkelstellungen, wie nachfolgend näher beschrieben, auf dem Gehäuse 4 des Regelteiles 3 fixierbar. Er weist eine axial vorstehende Anschlagnase 6 auf, die mit einem entsprechenden Drehanschlag an der Innenmantelfläche des nicht dargestellten Handgriffes zusammenwirkt. Auf diese Weise lässt sich eine maximale Temperatur des ausfließenden Mischwassers definieren, beispielsweise, um Verbrühungen des Benutzers zu vermeiden.

Im Einzelnen geschieht die Befestigung des Regelteiles 3 im Thermostatgehäuse 1 gemeinsam mit der Befestigung des Anschlagringes 5 wie folgt:

Der in der Zeichnung dargestellte Endbereich des Aufnahmeraumes 2 besitzt an der Innenmantelfläche des Thermostatgehäuses 1 eine Ringnut 7 sowie eine radial nach innen stehende Rippe 8. Die Rippe 8 wirkt bei eingeführtem Regelteil 3 mit einer O-Ringdichtung 9 zusammen, die in eine Nut des Gehäuses 4 des Regelteiles 3 eingelegt ist. Weiter ins Innere des Aufnahmeraumes 2 führend, besitzt die Innenmantelfläche des Thermostatgehäuses 1 eine Ringnut 10 und eine weitere Rippe 11. Letztere wirkt mit einer ebenfalls in eine Nut des Gehäuses 4 des Regelteils 3 eingelegten O-Ringdichtung 12 zusammen. Zwischen der Nut 10 und dem Gehäuse 4 des Regelteils 3 wird auf diese Weise ein ringförmiger Wasserraum 13 gebildet, der in nicht dargestellter Weise mit dem Kaltwasseranschluss der Thermostatarmatur kommuniziert.

In axialer Richtung auf die Rippe 11 nach innen folgend, in der Zeichnung jedoch nicht mehr dargestellt, findet sich eine weitere Nut im Thermostatgehäuse 1 und eine weitere Rippe, die gegen das Gehäuse 4 des Regelteils mittels einer O-Ringdichtung abgedichtet ist, so dass ein weiterer ringförmiger Wasserraum entsteht, der mit dem Warmwasserzulauf der Thermostatarmatur verbunden ist. Die beiden ringförmigen Wasserräume, von denen der weiter außen liegende und dargestellte das Bezugszeichen 10 trägt, kommunizieren mit Ventilsitzen innerhalb des Gehäuses 4 des Regelteils 3, die ihrerseits mit dem Regelglied des Regelteiles 3 zusammenwirken. Das so erzeugte Mischwasser fließt dann in axialer Richtung aus dem Gehäuse 4 des Regelteils 3 aus und von dort über Wasserwege im Thermostatgehäuse 1 zu einem Mischwasserauslauf.

Das Gehäuse 4 des Regelteils 3 besitzt einen radial vorstehenden Bund 14, der bei vollständig eingeführtem Regelteil 3 an der Anschlagfläche 27 der Rippe 8 anliegt. Die gegenüberliegende, radial überstehende Ringfläche 26 des Bundes 14 dagegen wirkt als Anschlagfläche mit einer im Wesentichen radial verlaufenden Fläche 15 des Anschlagringes 5 zusammen.

Die Bauweise des Anschlagringes 5 unterscheidet sich vom Bekannten im Wesentlichen in Folgendem:

Die Innenausnehmung 16 des Anschlagringes 5 ist in dem in den beiden Figuren unten liegenden Bereich 16a über einen Winkel von etwa 180° als zur Achse des Aufnahmeraums 2 koaxiale Kreiszylindermantelfläche ausgebildet, wie dies auch beim Stande der Technik der Fall ist. In einem axial außen liegenden, dem äußeren Ende des Anschlagringes 5 benachbarten Bereich 16b ist die Innenausnehmung ebenfalls als Kreiszylindermantelfläche gestaltet, die zu dem unteren Bereich 16a koaxial ist. Auch der Bereich 16b erstreckt sich etwa über 180°. In axialer Richtung weiter innen liegend dagegen besitzt die Innenausnehmung 16 einen Mantelflächenbereich 16c, der zwar ebenfalls eine Kreiszylindermantelfläche ist, deren Achse aber gegenüber der gemeinsamen Achse der Bereiche 16a und 16b so verkippt ist, dass ein Winkel von etwa 5 bis 10° zwischen diesen Achsen entsteht. Die Radien aller Bereiche 16a, 16b, 16c korrespondieren mit dem Außenradius des jeweils benachbarten Bereiches des Gehäuses 4 des Regelteils 3.

An der Außenmantelfläche ist der Anschlagring 5 mit einer verhältnismäßig breiten Nut 17 ausgestattet, die im Wesentlichen der Materialersparnis dient. In axialer Richtung nach innen folgt eine Ausnehmung 18, die axial nach außen durch einen Bund 19 und axial nach innen durch eine Haltenase 20 begrenzt ist. Die radial äußeren Stirnflächen des Bundes 19 und der Haltenase 20 liegen auf einer gemeinsamen gedachten Zylindermantelfläche, die koaxial zu dem Bereich 16c der Innenmantelfläche des Anschlagringes 5 ist. Der Radius dieser von dem Bund 19 und er Haltenase 20 aufgespannten Zylindermantelfläche entspricht dem Radius des Aufnahmeraumes 2 in dessen axial äußerstem Bereich.

Der Haltenase 20 an der Außenfläche des Anschlagringes 5 etwa diametral gegenüberliegend ist in diesem ein metallischer Einsatz 21 mit einem Innengewinde 22 befestigt. Ein solcher Einsatz 21 findet dort Verwendung, wo der Anschlagring 5 aus Kunststoff hergestellt ist. Ist der Anschlagring 5 selbst aus Metall, kann auf den gesonderten Einsatz 21 verzichtet werden.

Durch eine radiale Bohrung 23 des Thermostatgehäuses 1 kann eine Madenschraube 23 geschoben werden, die in nachfolgend beschriebener Weise mit dem Innengewinde 22 des Einsatzes 21 zusammenwirkt.

Regelteil 3 und Anschlagring 5 werden in folgender Weise in dem Thermostatgehäuse 1 montiert:

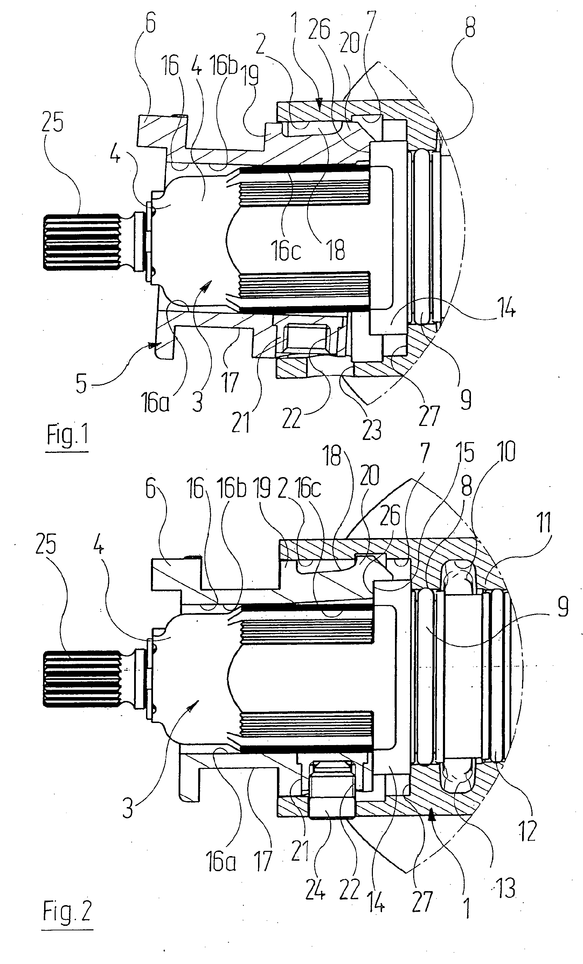

Zunächst wird, wie in Figur 1 dargestellt, das Regelteil 3 von der Seite her in den Aufnahmeraum 2 des Thermostatgehäuses 1 eingeführt, bis sein radial überstehender Bund 14 an der Anschlagfläche 27 der Rippe 8 anstößt. Nunmehr wird der Anschlagring 5 über das Gehäuse 4 des Regelteiles 3 geschoben, wobei der Bereich 16c seiner Innenmantelfläche koaxial zum Regelteil 3 steht. In Figur 1 ist dies dadurch zu erkennen, dass dieser Bereich 16c an der Außenmantelfläche des Gehäuses 4 des Regelteils 3 anliegt. Die radial äußeren Ringflächen des Bundes 19 und der Haltenase 20 liegen in entsprechender Weise am benachbarten Bereich der Innenmantelfläche des Thermostatgehäuses 1 an. Dies bedeutet gleichzeitig, dass die Achse des axial über das Thermostatgehäuse 1 überstehenden Bereichs des Anschlagringes 5 gegenüber der Achse des Aufnahmeraumes 2 verkippt ist. Zwischen dem unteren Bereich der Außenmantelfläche des Gehäuses 4 des Regelteiles 3 und dem Bereich 16a der Innenmantelfläche des Anschlagringes 5 entsteht ein im Querschnitt keilförmiger Ringspalt, wie dies der Figur 1 zu entnehmen ist.

Der Anschlagring 5 wird nunmehr axial so weit in den Aufnahmeraum 2 hineingeschoben, bis die Haltenase 20 der Ringnut 7 gegenübersteht. Nunmehr wird der Anschlagring 5 in Figur 1 nach unten gedrückt, wobei die Haltenase 20 in die Ringnut 7 eindringt. Jetzt stehen die Bereiche 16a und 16b der Innenmantelfläche des Anschlagringes 5 koaxial zum Gehäuse 4 des Regelteiles 3 und damit auch koaxial zu Innenmantelfläche des Thermostatgehäuses 1. Bei dieser Kippbewegung kommt das Innengewinde 22 des Einsatzes 21 in radiale Ausrichtung mit der Bohrung 23 des Thermostatgehäuses 1, so dass nunmehr die Madenschraube 24 von außen durch die Bohrung 23 hindurchgeführt und in das Innengewinde 22 eingeschraubt werden kann.

Damit sind gleichzeitig die Befestigung des Regelteiles 3 im Thermostatgehäuse 1 als auch die Befestigung des Anschlagringes 5 am Regelteil 3 abgeschlossen.

## Patentansprüche

1. Sanitäre Thermostatarmatur mit
a) einem Thermostatgehäuse (1);
b) einem in einem Aufnahmeraum (2) des Thermostatgehäuses (1) zumindest teilweise angeordneten Regelteil (3), das seinerseits aufweist:
ba) ein in einem Gehäuse (4) angeordnetes temperaturempfindliches Element;
bb) ein durch das temperaturempfindliche Element verschiebbares Regelglied, das mit einem Warmwassersitz und einem Kaltwassersitz zusammenwirkt, die in dem Aufnahmeraum (2) ausgebildet sind;
bc) eine Stellspindel (25), an welcher die Solltemperatur des aus der Thermostatarmatur ausfließenden Mischwassers einstellbar ist;
c) einem Handgriff, der auf der Stellspindel (25) befestigbar ist und einen ersten Anschlag aufweist;
d) einen Anschlagring (5), der zumindest teilweise in dem Aufnahmeraum (2) des Thermostatgehäuses (1) angeordnet ist und einen zweiten Anschlag (6) aufweist, der mit dem ersten Anschlag zusammenwirkt;
**dadurch gekennzeichnet, dass**
e) der Anschlagring (5) eine Haltenase (20) aufweist, die in der Fertigmontagestellung in eine kreisbogenförmige Nut (7) an der Innenmantelfläche des Aufnahmeraums (2) des Thermostatgehäuses (1) eingreift, sowie ein Gewinde (22), in welches in der Fertigmontagestellung eine durch eine Öffnung (23) des Thermostatgehäuses (1) geführte Schraube (24) einschraubbar ist;
wobei
f) die Außenkontur des Anschlagrings (5) so gestaltet ist, dass
fa) in einer gegenüber der Achse des Aufnahmeraums (2) des Thermostatgehäuses (1) verkippten Position der die Haltenase (20) aufweisende Bereich in den Aufnahmeraum (2) des Thermostatgehäuses (1) einschiebbar ist;
fb) der Anschlagring (5) in der axialen Position, welche der Fertigmontagestellung entspricht, in eine zum Aufnahmeraum (2) koaxiale Lage kippbar ist, in welcher die Haltenase (20) in die kreisbogenförmige Nut (7) des Aufnahmeraums (2) eindringt und die Schraube (24) in das Gewinde (18) des Anschlagrings (5) einschraubbar ist.

2. Sanitäre Thermostatarmatur nach Anspruch 1, **dadurch gekennzeichnet, dass** das Gewinde (22) des Anschlagrings (5) der Haltenase (20) etwa diametral gegenüberliegt.

3. Sanitäre Thermostatarmatur nach Anspruch 1 oder 2, **dadurch gekennzeichnet, dass** der Anschlagring (5) eine Anschlagfläche (15) aufweist, mit der er in der Fertigmontagestellung an einer Anschlagfläche (26) des Gehäuses (4) des Regelteils (3) anliegt und dieses dadurch in Anlage an eine Anschlagfläche (27) des Aufnahmeraums (2) des Thermostatventilgehäuses (1) hält.

4. Sanitäre Thermostatarmatur nach einem der vorhergehenden Ansprüche, **dadurch gekennzeichnet, dass** der Anschlagring (5) in dem Aufnahmeraum (2) des Thermostatgehäuses (1) in unterschiedlichen Winkelstellungen befestigbar ist.
